# EUROPÄISCHE PATENTSCHRIFT

(11) **EP 2 743 126 B1**
(45) Veröffentlichungstag und Bekanntmachung des Hinweises auf die Patenterteilung: **04.05.2016**
(21) Anmeldenummer: 13196820.8
(22) Anmeldetag: 12.12.2013
(51) Int. Cl.: B60N 2/50, B60N 2/07

(54) **Fahrzeugsitz mit Rollenführung**
Vehicle seat with roller guide
Siège de véhicule avec guidage à roulettes

(30) Priorität: 17.12.2012 DE 102012112430
(43) Veröffentlichungstag der Anmeldung: 18.06.2014
(73) Patentinhaber: GRAMMER AG, 92224 Amberg (DE)
(72) Erfinder: Lehner, Norbert, 92271 Freihung (DE)
(74) Vertreter: Hannke, Christian

(56) Entgegenhaltungen:
- EP-A1- 2 457 765
- DE-B4-102006 059 088
- DE-C1- 19 648 170
- US-A- 4 941 637

## Beschreibung

Die Erfindung betrifft einen Fahrzeugsitz mit Rollenführung, wobei die Rollenführung mindestens eine zumindest teilweise seitliche offene Führungsschiene und mindestens eine in der Führungsschiene abrollende, mit Teilen des Fahrzeugsitzes über mindestens eine Achse verbundene Laufrolle aufweist, gemäß dem Oberbegriff des Patentanspruches 1.

Aus DE19648170 C1 ist ein Fahrzeugsitz mit Rollenführung bekannt, der die Merkmale des Oberbegriffs des Anspruch 1 umfasst.

Rollenführungen für Fahrzeugsitze, insbesondere zum Abrollen von Rollen, die mit einem Scherengestell verbunden sind, welches in Vorwärts- und Rückwärtsrichtung bei Auf- und Abschwingen des Fahrzeugsitzes nach vorne und nach hinten sich ausdehnt und somit eine Abrollung der Rollen innerhalb der Führungsschiene erfordern, sind vielseitig bekannt. Derartige Rollenführungen weisen oft das Problem auf, dass die Rollen innerhalb der Führungsschienen, die zumeist in ihrem Querschnitt U-förmig ausgebildet sind, nach oben und nach unten relativ viel Spiel aufweisen, da sie sich aufgrund der gegenläufigen Bewegungen an ihrer Oberseite und an ihrer Unterseite gegenüber den anliegenden Innenwänden der Führungsschiene selbst blockieren würden.

Um ein derartiges Spiel der Rollen innerhalb der Führungsschienen zu vermeiden, werden bisher pro Rollenlagerung innerhalb der Führungsschiene mindestens zwei Rollen angeordnet, nämlich eine Rolle, die an einer rollenoberseitigen Innenwand der Führungsschiene abrollt, jedoch keinen Kontakt zu der rollenunterseitigen Innenwand der Führungsschiene aufweist und eine weitere Rolle, die einen Kontakt zu der rollenunterseitigen Innenwand, jedoch keinen Kontakt zu der rollenoberseitigen Innenwand aufweist. Hierdurch kann erreicht werden, dass eine Kombination aus zwei derartigen Rollen ein spielfreies Abrollen der Rollenlagerung und der daran befestigten Teile, wie beispielsweise das Ende eines Scherenarmes, innerhalb der Führungsschiene möglich ist. Allerdings sind derartige Rollenlagerungen unter Zuhilfenahme von mindestens zwei Rollen, gegebenenfalls mit in Höhenrichtung festen Achsen, aufwendig in ihrer Herstellung und kostenintensiv.

Deshalb ist es Aufgabe der Erfindung, einen Fahrzeugsitz mit einer Rollenführung zur Verfügung zu stellen, die kostengünstig und einfach herstellbar ist.

Gelöst wird diese Aufgabe gemäß den Merkmalen des Patentanspruches 1.

Ein wesentlicher Punkt der Erfindung liegt darin, dass bei einem Fahrzeugsitz mit Rollenführung, wobei die Rollenführung mindestens eine zumindest teilweise seitlich offene Führungsschiene und mindestens eine in der Führungsschiene abrollende, mit Teilen des Fahrzeugsitzes, wie beispielsweise einem Scherengestell, eine über mindestens eine Achse verbundene Laufrolle aufweist und wobei ein Rollenmantelteil der Laufrolle mit einer Lauffläche der Laufrolle entlang einer parallel oder mit einem Winkel zum Längsverlauf der Achse angeordneten rollenunterseitigen Innenwand der Führungsschiene abrollbar ist, zumindest der Rollenmantelteil der Laufrolle aus durch Druckbeaufschlagung mittels Sitzbelegung verformbares Material besteht. Zudem soll in bewegungslosem Zustand der Rollenmantelteil ohne Sitzbelegung an der rollenunterseitigen Innenwand und an einer parallel dazu verlaufenden rollenoberseitigen Innenwand der Führungsschiene kontaktierend anliegen.

Durch die Ausbildung eines Rollenmantelteils, der bei entsprechend dünner Ausbildung auch als Mantelfläche bezeichnet werden kann, aus verformbaren Material, welches in Radialrichtung verformt werden kann, wird vorteilhaft erreicht, dass bei der richtigen Auswahl des Materials die Rolle an ihrer Unterseite hinreichend eingedrückt und damit verformt wird, um an ihrer Oberseite keinen Kontakt mehr zu der oberseitigen Innenwand der Führungsschiene aufzuweisen und somit ein blockierungsfreies Rollen der Rolle innerhalb der U-förmigen Führungsschiene möglich ist.

Sobald jedoch eine Person den Sitz verlässt und somit keine Sitzbelegung mehr vorliegt, liegt auch keine ausreichende Druckbeaufschlagung mehr für die Rolle vor, um diese an ihrer Unterseite in Kontakt zu der rollenunterseitigen Innenwand der Führungsschiene ausreichend zu deformieren, weshalb auch weiterhin ein Kontakt der Oberseite der Rolle gegenüber der rollenoberseitigen Innenwand der Führungsschiene besteht und somit eine Blockierung vorliegt. Durch eine derartige Blockierung der Rolle innerhalb der U-förmigen Führungsschiene wird erreicht, dass bei Verlassen des Sitzes durch die den Sitz benutzende Person der Sitz in seiner Höhenrichtung automatisiert blockiert wird und somit kein Einklemmen der Person zwischen dem Lenkrad und der Sitzteilvorderkante möglich ist.

Das Material des Rollenmantelteiles kann ein elastisches Material sein. Geeignet sind hierfür sämtliche elastische Stoffe wie Elastomere, Thermoplaste, Duroplaste und dergleichen, solange sie eine ausreichende Festigkeit gegenüber Abnutzung aufgrund der Rollenbewegung aufweisen. Insbesondere PUR, Polyurethan ist hierfür als Beschichtungsmaterial für ein darunterliegendes Rollenkernteil geeignet.

Das Rollenkernteil, welches innerhalb des Rollenmantelteils liegt, ist in der Regel aus unelastischem Material, kann jedoch auch aus leicht elastischem Material bestehen. Wichtig ist, dass eine Verbindung zwischen dem elastischen Rollenmantelmaterial und dem darunterliegenden innenseitigen Rollenkernmaterial in dauerhafter Form besteht. Beispielsweise kann das Rollenkernmaterial ein Metall oder auch ein Hartkunststoff, wie ein Duroplast sein.

Als Rollenform sind sämtliche Arten von herkömmlichen Rollen, wie beispielsweise zylinderförmige Rollen, reifenartige Rollen, ringartige Rollen und dergleichen denkbar. Ebenso sind kegelförmige oder kegelstumpfförmige Rollen denkbar, bei denen die Innenwände der Führungsschiene selbstverständlich ebenso in einem Winkel zu der Achse, an der die Rollen befestigt sind, angeordnet sein müssen, um eine entsprechend komplementär ausgebildete Abrollfläche für die kegelstumpfförmigen oder kegelförmigen Rollen darzustellen.

Zusätzlich oder alternativ kann der Rollenmantelteil eine Vielzahl an in Radialrichtung der Laufrolle verformbaren, sich zumindest teilweise radial nach außen erstreckenden, blattähnlichen Elemente umfassen. Diese blattähnlichen Elemente sind vorzugsweise streifenförmig ausgebildet und erstrecken sich in Achsenrichtung mit einer ersten Streifenlängsseite an einer Mantelfläche des inneren Rollenkernteils aus eher unelastischem Material und mit einer zweiten Streifenlängsseite, die von der Mantelfläche in Radialrichtung beabstandet angeordnet ist.

Diese blattähnlichen Elemente können in ihrer Streifenform sich auch teilweise überlappen. Dies wird deutlich, wenn man die Rolle in ihrem Querschnitt, also quer zur Längsrichtung der Achse, betrachtet.

Diese blattähnlichen Elemente können als federartige Elemente in Form von Blattfedern ausgebildet sein, so dass sie sich immer von alleine aufstellen und sich somit in Radialrichtung nach außen bewegen wollen, sobald keine Sitzbelegung oder keine ausreichende Druckbeaufschlagung mehr vorhanden ist. Selbstverständlich können diese blattähnlichen Elemente auch jeder Art von kunststoffartigen Elementen sein, die nicht nur an einer Seite endseitig an der Mantelfläche des Rollenkernteils enden müssen, sondern auch mit beiden Enden an dieser Mantelfläche enden können und sich zwischen diesen beiden Enden wölbungsartig nach außen in Radialrichtung auswölben. Diese wölbungsartige Ausbildung wird dann bei Druckbeaufschlagung eingedrückt und somit eine Reduzierung der Dicke des Rollenmantelteils erreicht, um die Rolle von ihrer Blockierung innerhalb der Führungsschiene freizugeben.

Vorzugsweise liegt die Dicke des Rollenmantelteils in Radialrichtung und der Radius des Rollenkernteils in einem Verhältnis aus einem Bereich von 1 : 9 bis 1: 1, bevorzugter in einem Bereich von 1 : 2.

Durch die Ausbildung eines Rollenmantelteils in elastischer Form und eines Rollenkernteils in mehr oder weniger unelastischer Form ist es möglich, lediglich eine Rolle pro Rollenlagerung zu verwenden. Hierdurch ergibt sich eine herstellungsbedingte Materialeinsparung und somit auch eine Kosteneinsparung.

Gemäß einer bevorzugten Ausführungsform erfährt das verformbare Material des Rollenmantelteils bei Druckbeaufschlagung im Bereich des Kontaktes mit der rollenunterseitigen Innenwand der Führungsschiene eine Reduzierung seiner Dicke von 0,005 bis 0,8 mm, bevorzugter von 0,01 bis 0,3 mm. Diese Dickenreduzierung reicht aus, um die Rolle an ihrer Oberseite freizugeben und somit die Blockierung der Rolle innerhalb der Führungsschiene aufzuheben.

Vorzugsweise ist die Rolle in bewegungslosem Zustand ohne Sitzbelegung mit ausgedehntem Rollenmantelteil derart stark gegen eine rollenunterseitige Innenwand und die rollenoberseitige Innenwand gedrückt, dass die Rolle innerhalb der Führungsschiene blockiert wird. Hierfür muss das geeignete Material für den Rollenmantelteil ausgewählt werden, um in Abhängigkeit von dem Gewicht der Personen, die für eine Sitzbelegung in Frage kommen, ein ausreichendes Zusammendrücken des Rollenmantelteils im unteren Bereich gegenüber der Innenwand zu erreichen, so dass die Blockierung aufgehoben wird.

Zum anderen soll jedoch auch ein ausreichendes Ausdehnen des Rollenmantelteils bei nicht vorhandener Sitzbelegung stattfinden, um die Rolle innerhalb der Führungsschiene zu blockieren, jedoch diese Blockierung auch wieder bei einer stattfindenden Sitzbelegung durch eine leichte Person aufheben lassen zu können.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: in einer schematisch perspektivischen Darstellung einen Fahrzeugsitz;
- Fig. 2: in einer perspektivischen Ausschnittdarstellung einen Anteil des Fahrzeugsitzes gemäß der vorliegenden Erfindung mit Teilen der Rollenführung;
- Fig. 3: in einer perspektivischen Darstellung einen Ausschnitt der Rollenführung des erfindungsgemäßen Fahrzeugsitzes;
- Fig. 4: in einer Querschnittsdarstellung die Rollenführung für den erfindungsgemäßen Fahrzeugsitz mit einer Rolle im spielfreien Zustand und in einem Freilaufzustand;
- Fig. 5: in einer Querschnittsdarstellung eine Rolle für die Rollenführung des erfindungsgemäßen Fahrzeugsitzes; und

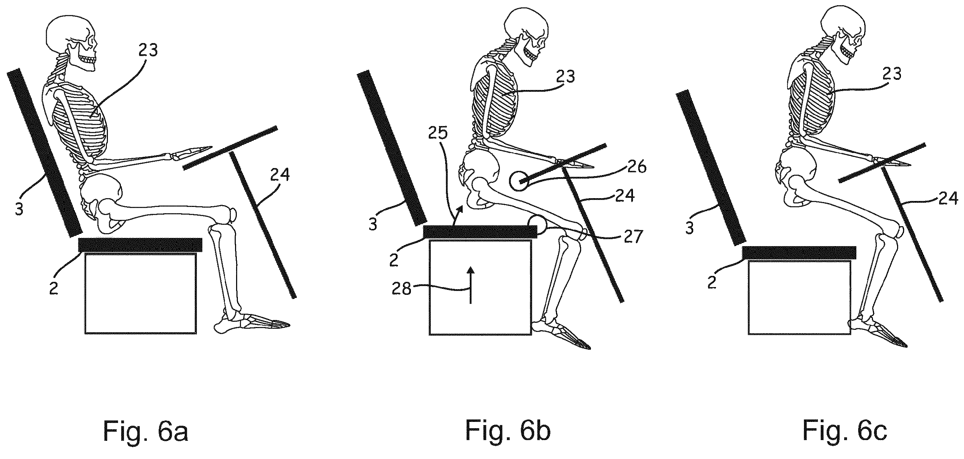

- Fig. 6a, b, c: in einer seitlichen schematischen Darstellung die Funktion der Rollenführung des erfindungsgemäßen Fahrzeugsitzes.

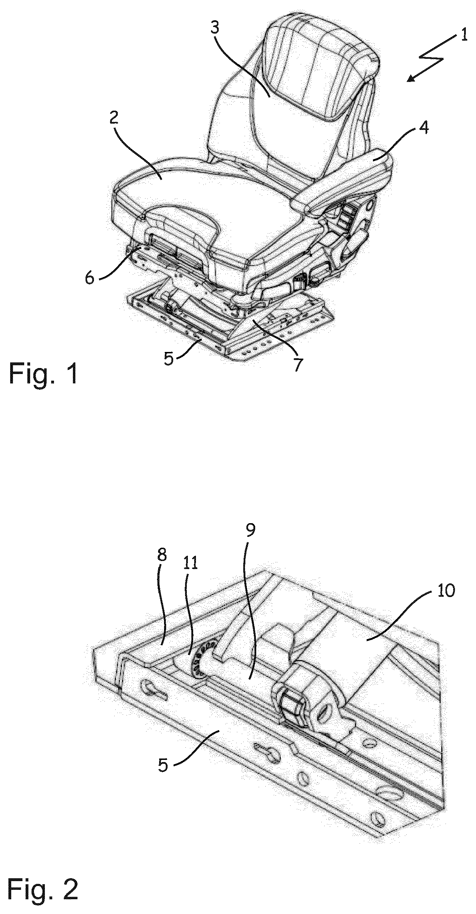

In Fig. 1 ist in einer perspektivischen Darstellung ein Fahrzeugsitz 1 mit einem Sitzteil 2 und mit einer Rückenlehne 3 dargestellt. Ebenso weist dieser Fahrzeugsitz eine Armlehne 4 auf.

Ein Unterteil 5 ist gegenüber einem Oberteil 6 mittels Scherenarmen 7 verbunden, wobei sich diese beiden Teile 5, 6 aufeinander zubewegen können, in der Form, dass das Oberteil 6 gegenüber dem Unterteil schwingend gelagert ist.

Um die Scherenarme auf und ab schwingen lassen zu können, müssen diese zumindest teilweise, auch an ihren unteren Enden, in Fahrzeuglängsrichtung, also in Vorwärts- und Rückwärtsrichtung bewegbar angeordnet sein. Hierfür sind - wie in Fig. 2 gezeigt - Führungsschienen 8 vorhanden, die in ihrem Querschnitt vorzugsweise U-förmig ausgebildet sind und innerhalb welcher Rollen 11, in diesem Fall eine Rolle 11, rollend gelagert sein können.

Die Rolle 11 ist an einer Achse 9 angeordnet, an welche wiederum Teile des Fahrzeugsitzes befestigt sind, wie beispielsweise ein Dämpfer 10, der eine dämpfende Wirkung auf die Aufund Abwärtsbewegung des Fahrzeugsitzes, also des Oberteiles 6 gegenüber dem Unterteil 5, ausüben soll.

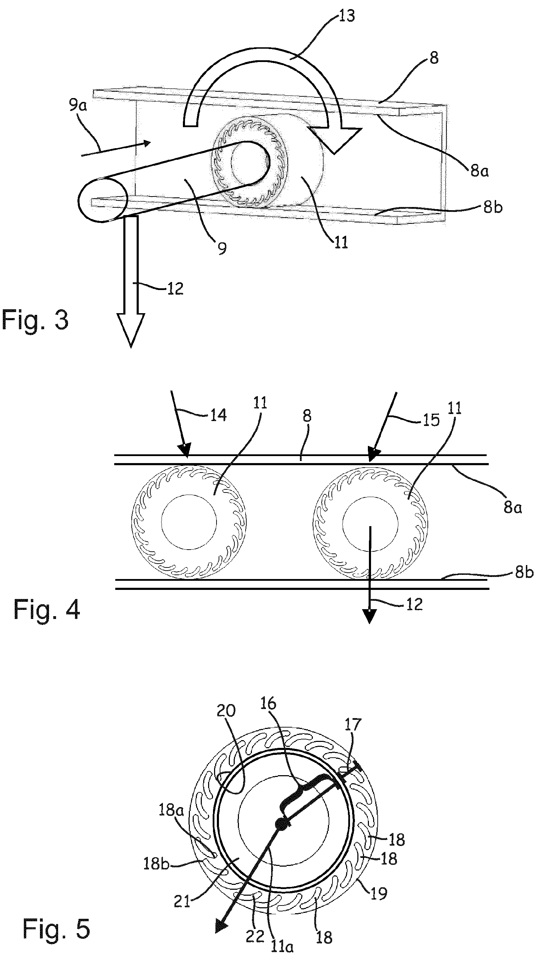

In Fig. 3 wird in einer perspektivischen Darstellung das U-förmige Führungsprofil bzw. die Führungsschiene 8 mit einer rollenoberseitigen bzw. oberseitigen Innenwand 8a und einer rollenunterseitigen bzw. unterseitigen Innenwand 8b dargestellt. Dieser Darstellung ist zu entnehmen, dass die Rolle 11, wenn Sie sich - in Bildebene betrachtet - nach rechts bewegt, also eine Rollenbewegung gemäß dem Rundpfeil 13 ausübt, entlang der unterseitigen Innenwand 8b abrollt. Die Achse 9 bewegt sich selbstverständlich zusammen mit der Rolle in diese Richtung und weist eine Achsenrichtung 9a auf.

Eine derartige Bewegung der Rolle nach rechts ist jedoch nur dann möglich, wenn eine Druckbeaufschlagung gemäß dem Pfeil 12 durch beispielsweise eine Sitzbelegung mittels einer Person stattfindet. Hierdurch wird nämlich die Rolle 11 nach unten gedrückt und erfährt eine Verformung ihrer Unterseite, welches die Kontaktseite zu der unterseitigen Innenwand 8b der Führungsschiene 8 darstellt. Somit wird die Rolle an ihrer Oberseite, also gegenüber der oberseitigen Innenwand 8a der Führungsschiene 8 freigegeben.

Deutlich wird dies bei einem näheren Betrachtung der Figur 4, in welcher in einer Querschnittsdarstellung eine Rolle 11 in ihrem spielfreien Zustand und in ihrem Freilaufzustand wiedergegeben wird. Dieser Darstellung ist deutlich zu entnehmen, dass die Rolle 11, sobald sie eine Druckbeaufschlagung 12, beispielsweise mittels einer Sitzbelegung erfährt, eine Art Freilauf bzw. ein Sich-Loslösen von der oberseitigen Innenwand 8a in ihrem oberen Bereich erfährt. Dies wird durch den Pfeil 15 verdeutlicht.

Demgegenüber ist bei einer nicht vorhandenen Druckbeaufschlagung die Rolle spielfrei an ihrer Oberseite gegenüber der oberseitigen Innenwand 8a der Führungsschiene anliegend. Dies wird durch den Pfeil 14 verdeutlicht. Hierdurch findet eine Blockierung der Rolle 11 innerhalb der Führungsschiene 8 statt, welches gewollt ist.

In Fig. 5 wird die Rolle an sich für die Rollenführung des erfindungsgemäßen Fahrzeugsitzes näher betrachtet. Dieser Darstellung ist zu entnehmen, dass die Rolle aus einem Rollenkernteil 21, der durchaus auch als Rohrmantel ausgebildet sein kann, und einem Rollenmantelteil 22 besteht.

Der Rollenmantelteil 22 umfasst den Rollenkernteil 21 an seiner Mantelfläche 20.

Der Rollenmantelteil 22 besteht vorzugsweise aus einem elastischen Material, welches bei Druckbeaufschlagung eine Dickenreduzierung erfährt und hierdurch im oberen Bereich die Rolle gegenüber der oberseitigen Innenwand 8a freigibt.

Der Rollenmantelteil 22 weist vorzugsweise eine Stärke bzw. eine Dicke 17 auf, die im Verhältnis zu dem Radius 16 des Rollenkernteils aus einem Bereich von 1 : 1,5, bevorzugt 1 : 2,5 ausgewählt wird.

Innerhalb des elastischen Materials des Rollenmantelkerns sind blattähnliche Elemente 18 angeordnet, die - wie dieser Darstellung zu entnehmen ist - sich zumindest teilweise überlappen.

Diese blattähnlichen Elemente weisen ein erstes Ende 18a auf, welches gegenüber der Mantelfläche 20 endet und gegebenenfalls an dieser befestigt ist, oder aber auch nur oberhalb des elastischen Materials des Rollenmantelteils eingebettet ist.

Die blattähnlichen Elemente 18 sind streifenförmig ausgebildet und erstrecken sich entlang der Achsenrichtung 9a auf der Manteloberfläche 20 des Rollenkernteiles 21.

Ein erstes Ende der blattähnlichen Elemente 18 erstreckt sich nach außen in Radialrichtung 11a betrachtet und kann sich aufgrund einer federähnlichen Ausbildung immer wieder radial nach außen von alleine erstrecken, sofern keine Druckbeaufschlagung stattfindet. Bei der Druckbeaufschlagung 12 jedoch werden diese blattähnlichen Elemente in Radialrichtung nach innen, also zur Achsenrichtung hin, eingebogen bzw. verformt.

Die Lauffläche 19 bzw. Mantelfläche 19 des Rollenmantelteils 22 dient zum Abrollen der Rolle auf der Innenwand 8d der Führungsschiene.

### Bezugszeichenliste

- 1: Fahrzeugsitz
- 2: Sitzteil
- 3: Rückenlehne
- 4: Armlehne
- 5: Unterteil
- 6: Oberteil
- 7: Scherenarme
- 8: Führungsschienen
- 8a: (rollen-)oberseitige Innenwand
- 8b: (rollen-)unterseitige Innenwand
- 9: Achse
- 9a: Achsenrichtung/Längsverlauf
- 10: Dämpfer
- 11: Rolle/Laufrolle
- 11a: Radialrichtung
- 12: Pfeil/Druckbeaufschlagung
- 13: Rundpfeil
- 14: Pfeil
- 15: Pfeil
- 16: Radius
- 17: Stärke/Dicke
- 18: blattähnliche Elemente
- 18a: erstes Ende/Streifenlängsseite
- 18b: Streifenlängsseite
- 19: Lauffläche/Mantelfläche
- 20: Mantelfläche
- 21: Rollenkernteil
- 22: Rollenmantelteil

## Patentansprüche

1. Fahrzeugsitz mit Rollenführung, wobei die Rollenführung mindestens eine zumindest teilweise seitlich offene Führungsschiene (8) und mindestens eine in der Führungsschiene (8) abrollende, mit Teilen des Fahrzeugsitzes (1) über mindestens eine Achse (9) verbundene Laufrolle (11) aufweist, wobei ein Rollenmantelteil (22) der Laufrolle (11) mit einer Lauffläche (19) der Laufrolle (11) entlang einer parallel oder mit einem Winkel zum Längsverlauf (9a) der Achse (9) angeordneten rollenunterseitigen Innenwand (8b) der Führungsschiene (8) abrollbar ist,
**dadurch gekennzeichnet, dass**
zumindest der Rollenmantelteil (22) der Laufrolle (11) aus durch Druckbeaufschlagung (12) mittels Sitzbelegung verformbarem Material besteht und in bewegungslosem Zustand ohne Sitzbelegung an der rollenunterseitigen Innenwand (8b) und einer parallel dazu verlaufenden rollenoberseitigen Innenwand (8a) der Führungsschiene (8) kontaktierend anliegt.

2. Fahrzeugsitz nach Anspruch 1,
**dadurch gekennzeichnet, dass**
der Rollenmantelteil (22) aus elastischem Material besteht.

3. Fahrzeugsitz nach Anspruch 1 oder 2,
**dadurch gekennzeichnet, dass**
der Rollenmantelteil (22) eine Vielzahl an in Radialrichtung (11a) der Laufrolle (11) verformbare, sich zumindest teilweise radial nach außen erstreckende blattähnliche Elemente (18) umfasst.

4. Fahrzeugsitz nach Anspruch 3,
**dadurch gekennzeichnet, dass**
die blattähnlichen Elemente (18) sich streifenförmig in Achsenrichtung (9a) erstrecken und mit einer ersten Streifenlängsseite (18a) an einer Mantelfläche (20) eines inneren Rollenkernteiles (21) aus unelastischem Material enden.

5. Fahrzeugsitz nach Anspruch 4,
**dadurch gekennzeichnet, dass**
die ersten Streifenlängsseiten (18a) an der Mantelfläche (20) befestigt sind und zweite Streifenlängsseiten (18b) der blattähnlichen Elemente (18) von der Mantelfläche (20) in Radialrichtung (11a) beabstandet sind.

6. Fahrzeugsitz nach Anspruch 4 oder 5,
**dadurch gekennzeichnet, dass**
sich die blattähnlichen Elemente (18) zumindest teilweise überlappen.

7. Fahrzeugsitz nach einem der vorangegangenen Ansprüche,
**dadurch gekennzeichnet, dass**
die Dicke (8, 17) des Rollenmantelteils (22) in Radialrichtung (11a) und der Radius (16) des Rollenkernteils (21) in einem Verhältnis aus einem Bereich von 1 : 9 bis 1 : 1, bevorzugt 1 : 2 liegt.

8. Fahrzeugsitz nach einem der vorangegangenen Ansprüche
**dadurch gekennzeichnet, dass**
bei Druckbeaufschlagung (12) das verformbare Material des Rollenmantelteils (22) im Bereich des Kontaktes mit der rollenunterseitigen Innenwand (8b) eine Reduzierung seiner Dicke von 0,005 bis 0,8 mm, bevorzugt 0,01 bis 0,3 mm erfährt.

9. Fahrzeugsitz nach einem der vorangegangenen Ansprüche,
**dadurch gekennzeichnet, dass**
die Rolle (11) im bewegungslosen Zustand ohne Sitzbelegung mit ausgedehntem Rollenmantelteil (22) derart stark gegen die rollenunterseitige Innenwand (8b) und die rollenoberseitige Innenwand (8a) der Führungsschiene (8) drückt, dass die Rolle (11) innerhalb der Führungsschiene (8) blockiert wird.

## Claims

1. Vehicle seat comprising a roller guide, the roller guide comprising at least one guide rail (8) that is open at the side at least in part, and at least one roller (11) that rolls in the guide rail (8) and is connected by means of at least one shaft (9) to parts of the vehicle seat (1), it being possible for a roller cover part (22) of the roller (11) to roll together with a running surface (19) of the roller (11) along an inner wall (8b) of the guide rail (8) on the lower side of the roller, which inner wall is arranged in a manner parallel to or at an angle to the longitudinal extent (9a) of the shaft (9),
**characterised in that**
at least the roller cover part (22) of the roller (11) consists of material that can be deformed by compression (12) by means of seat occupation, and, in a movement-free state without seat occupation, said roller cover part rests in a contacting manner on the inner wall (8b) of the guide rail (8) on the lower side of the roller and an inner wall (8a) of the guide rail extending parallel thereto on the upper side of the roller.

2. Vehicle seat according to claim 1, **characterised in that** the roller cover part (22) consists of resilient material.

3. Vehicle seat according to either claim 1 or claim 2, **characterised in that** the roller cover part (22) has a plurality of leaf-like elements (18) that can be deformed in the radial direction (11 a) of the roller (11) and extend radially outwards, at least in part.

4. Vehicle seat according to claim 3, **characterised in that** the leaf-like elements (18) extend in a strip-like manner in the direction (9a) of the shaft and end with a first longitudinal strip end (18a) on a lateral surface (20) of an inner roller core part (21) made of non-resilient material.

5. Vehicle seat according to claim 4, **characterised in that** the first longitudinal strip ends (18a) are attached to the lateral surface (20) and second longitudinal strip ends (18b) of the leaf-like elements (18) are at a spacing from the lateral surface (20) in the radial direction (11 a).

6. Vehicle seat according to either claim 4 or claim 5, **characterised in that** the leaf-like elements (18) overlap, at least in part.

7. Vehicle seat according to any of the preceding claims, **characterised in that** the thickness (8, 17) of the roller cover part (22) in the radial direction (11 a) and the radius (16) of the roller core part (21) is in a ratio from a range of from 1:9 to 1:1, preferably 1:2.

8. Vehicle seat according to any of the preceding claims, **characterised in that** during compression (12) the deformable material of the roller cover part (22) undergoes a reduction in the thickness thereof of from 0.005 to 0.8 mm, preferably from 0.01 to 0.3 mm, in the region of contact with the inner wall (8b) on the lower side of the roller.

9. Vehicle seat according to any of the preceding claims, **characterised in that**, in the movement-free state without seat occupation and with the roller cover part (22) extended, the roller (11) is pressed so strongly against the inner wall (8b) of the guide rail (8) on the lower side of the roller and the inner wall (8a) of the guide rail on the upper side of the roller that the roller (11) is blocked inside the guide rail (8).

## Revendications

1. Siège de véhicule avec guidage à galets, le guidage à galets comprenant au moins un rail de guidage (8) ouvert latéralement au moins partiellement et au moins un galet (11) roulant dans le rail de guidage (8), relié avec des parties du siège de véhicule (1) par l'intermédiaire d'au moins un axe (9), une partie d'enveloppe de galet (22) du galet (11) pouvant être roulé, avec une surface de roulement (19) du galet (11), le long d'une paroi interne (8b) du rail de guidage (8), située sur le côté inférieur du galet, parallèle ou disposée avec un angle par rapport à l'extension longitudinale (9a) de l'axe (9),
**caractérisé en ce qu'**
au moins la partie d'enveloppe (22) du galet (11) est constitué d'un matériau déformable par l'application d'une pression (12) lorsque le siège est occupé et s'appuie, avec un contact, dans l'état immobile sans occupation du siège, contre la paroi interne (8b), située du côté inférieur du galet, et contre une paroi interne (8a), située du côté supérieure du galet, du rail de guidage (8), parallèle à celle-ci.

2. Siège de véhicule selon la revendication 1, **caractérisé en ce que** la partie d'enveloppe du galet (22) est constitué d'un matériau élastique.

3. Siège de véhicule selon la revendication 1 ou 2, **caractérisé en ce que** la partie d'enveloppe du galet (22) comprend une pluralité d'éléments (18) en forme de feuilles, déformables dans la direction radiale (11 a) du galet (11), s'étendant au moins partiellement radialement vers l'extérieur.

4. Siège de véhicule selon la revendication 3, **caractérisé en ce que** les éléments en forme de feuilles (18) s'étendent sous la forme de bandes dans la direction axiale (9a) et se terminent, avec un premier côté longitudinal de bande (18a), au niveau d'une surface d'enveloppe (20) d'une partie de noyau de galet (21) intérieure en matériau non élastique.

5. Siège de véhicule selon la revendication 4, **caractérisé en ce que** les premiers côtés longitudinaux des bandes (18a) sont fixés à la surface d'enveloppe (20) et des deuxièmes côtés longitudinaux des bandes (18b) des éléments en forme de feuilles (18) sont écartés de la surface d'enveloppe (20) dans la direction radiale (11 a).

6. Siège de véhicule selon la revendication 4 ou 5, **caractérisé en ce que** les éléments en forme de feuilles (18) se superposent au moins partiellement.

7. Siège de véhicule selon l'une des revendications précédentes, **caractérisé en ce que** l'épaisseur (8, 17) de la partie d'enveloppe du galet (22) dans la direction radiale (11 a) et le rayon (16) de la partie de noyau du galet (21) présentent entre eux un rapport de l'ordre de 1:9 à 1:1, de préférence 1 :2.

8. Siège de véhicule selon l'une des revendications précédentes, **caractérisé en ce que**, lors de l'application d'une pression (12), le matériau déformable de la partie d'enveloppe du galet (22) subit, au niveau du contact avec la paroi interne (8b) du côté inférieur du galet, une réduction de son épaisseur de 0,005 à 0,8 mm, de préférence de 0,01 à 0,3 mm.

9. Siège de véhicule selon l'une des revendications précédentes, **caractérisé en ce que** le galet (11) comprime, dans l'état immobile sans occupation du siège, avec la partie d'enveloppe de galet (22) dilatée, fortement contre la paroi interne (8b) du côté inférieur du galet et contre la paroi interne (8a) du côté supérieur du galet du rail de guidage (8), de façon à ce que le galet (11) soit bloqué à l'intérieur du rail de guidage (8).
